# EUROPEAN PATENT APPLICATION

(11) **EP 3 500 019 A1**
(43) Date of publication of application: **19.06.2019**
(21) Application number: 17848037.2
(22) Date of filing: 18.08.2017
(51) Int. Cl.: H04W 72/04

(54) **DATA TRANSMISSION METHOD AND TERMINAL**

(30) Priority: 07.09.2016 CN 201610812289
(71) Applicant: Huawei Technologies Co., Ltd., Longgang District Shenzhen, Guangdong 518129 (CN)
(72) Inventor: LIU, Yalin, Shenzhen Guangdong 518129 (CN)
(74) Representative: Pfenning, Meinig & Partner mbB
(86) International application number: PCT/CN2017/098086
(87) International publication number: WO 2018/045864

(57) **Abstract**

Embodiments of the present invention disclose a data transmission method and a terminal. The method includes: when a terminal is in an energy saving state, detecting, by the terminal, whether a first logical channel corresponding to a first tunnel includes first to-be-transmitted data, and detecting whether a second logical channel corresponding to a second tunnel includes second to-be-transmitted data; if it is detected that the first logical channel includes the first to-be-transmitted data, and a sum of the first to-be-transmitted data and the second to-be-transmitted data on the second logical channel is less than a preset threshold, selecting the second tunnel to transmit the first to-be-transmitted data and the second to-be-transmitted data; or if it is detected that the first logical channel does not include the first to-be-transmitted data, and the second to-be-transmitted data on the second logical channel is less than a preset threshold, selecting the second tunnel to transmit the second to-be-transmitted data; and transmitting, by the terminal, data by using the second tunnel. According to the present invention, a dedicated tunnel may be selected to transmit relatively small data, thereby saving network resources and improving transmission efficiency.

## Description

### TECHNICAL FIELD

The present invention relates to the field of communications technologies, and in particular, to a data transmission method and a terminal.

### BACKGROUND

With development of a mobile Internet technology, and in particular, with emergence and popularization of intelligent terminals such as a mobile phone and a tablet computer, an increasing quantity of users directly use these terminals to access a network. In addition, with rapid development of an operating system and hardware performance of a terminal, lots of software originally used on a computer can be used on an intelligent, miniature, and mobile terminal, and in particular, social software is frequently used. The software is usually instant messaging software, and a connection between the software and a network is characterized by burstiness, timing, and the like. A piece of instant messaging software is used as an example. The software sends a heartbeat packet on an operating system of a terminal every two minutes, to periodically notify a server of a current status. For this purpose, a network controller needs to transmit tens of pieces of network signaling such as access signaling and bearer setup signaling, and the network controller releases an air interface resource after 7 to 15 seconds after the transmission is completed. In one month, even if a user using the instance messaging software does not perform any operation, 22320 heartbeat packets are sent, which is equivalent to consuming a signaling processing capability of sending 22320 short messages or a signaling processing capability of making more than 10000 calls, but only 1.83 megabytes of traffic are generated.

It can be learned that when a terminal uses instant messaging software, a large amount of network signaling is generated to maintain a connection to a server, and the generated network signaling is only intended to perform transmission of few bytes. Such signaling may cause interference to a normal service of a network. In addition, considering a development prospect of the network in the future, a large quantity of terminals are connected to the network, and similar to sending an instant message, many terminals discontinuously send data with relatively little content and a relatively short length to the network. Although the terminals may send the data at quite low frequency, a large quantity of network signaling resources are consumed as terminals increase.

### SUMMARY

Embodiments of the present invention provide a data transmission method and a terminal, and in the method, a dedicated tunnel may be selected to transmit relatively small application data, thereby saving resources and improving transmission efficiency.

According to a first aspect of the present invention, a data transmission method is provided, including:
when the terminal is in an energy saving state, detecting, by the terminal, whether a first logical channel corresponding to a first tunnel includes first to-be-transmitted data, and detecting whether a second logical channel corresponding to a second tunnel includes second to-be-transmitted data;
if it is detected that the first logical channel includes the first to-be-transmitted data, and a sum of the first to-be-transmitted data and the second to-be-transmitted data on the second logical channel is less than a preset threshold, selecting the second tunnel to transmit the first to-be-transmitted data and the second to-be-transmitted data; or if it is detected that the first logical channel does not include the first to-be-transmitted data, and the second to-be-transmitted data on the second logical channel is less than a preset threshold, selecting the second tunnel to transmit the second to-be-transmitted data; and
transmitting, by the terminal, data by using the second tunnel.

Through implementation of the foregoing manner, the terminal in the energy saving state may directly use the second tunnel to transmit relatively small data without re-establishing a tunnel to transmit the data, thereby improving data transmission efficiency and reducing a data transmission delay.

Optionally, in another implementation, if first to-be-transmitted data exists on a logical channel in the first tunnel, the first tunnel may be preferentially used to transmit data; or if to-be-transmitted data is greater than or equal to the preset threshold, the first tunnel may be preferentially used to transmit data, ensuring that relatively large data or service data having a relatively high priority can be transmitted in a timely manner. In addition, if application data that is to be discontinuously transmitted and whose length is less than a preset threshold exists on a logical channel in the first tunnel, and the terminal is in a connected state and is currently not synchronized with a base station, or is in an idle state, or is in the energy saving state, the second tunnel may be used to transmit data.

With reference to the implementation of the first aspect, in a first possible implementation of the first aspect,
if a base station supports the terminal in transmitting data by using the second tunnel when the terminal is in a connected state, and the terminal is currently not synchronized with the base station, when to-be-transmitted data is less than the preset threshold, the terminal selects the second tunnel to transmit the to-be-transmitted data.

Even if the terminal in the connected state needs to transmit relatively small data, if the first tunnel is used for transmission as usual, the terminal can perform uplink transmission only after being synchronized with the base station by using a random access procedure, leading to relatively low efficiency. In comparison, using the second tunnel to transmit user data that is less than the preset threshold can greatly improve transmission efficiency.

If the terminal is in a connected state and is currently synchronized with a base station, when to-be-transmitted data is less than the preset threshold, the terminal selects the second tunnel to transmit the to-be-transmitted data.

In this way, the first tunnel may not be occupied, so that another user who needs to transmit a relatively large amount of data can use the first tunnel, thereby improving resource utilization efficiency.

With reference to the implementation of the first aspect, in a second possible implementation of the first aspect, the method further includes:
determining a size of data on each logical channel corresponding to the first tunnel and a size of data on each logical channel corresponding to the second tunnel; and
when a sum of data on all the logical channels is less than the preset threshold,
if the terminal is in a connected state and is currently not synchronized with a base station, or is in an idle state, or is in the energy saving state, or needs to obtain a transmission resource by using a random access procedure because no uplink transmission resource is available, selecting the second tunnel to transmit data; or
if the terminal is in a connected state and is currently synchronized with a base station, selecting the first tunnel or the second tunnel to transmit data.

In the foregoing manner, whether to use the second tunnel to transmit data needs to be determined based only on a size of a packet and a terminal status, and there is no need to determine a logical channel from which the packet comes. A supplement may be made to the foregoing determining policy, so that manners for determining a transmission tunnel by the terminal are more diversified.

With reference to any one of the first aspect, or the first and the second possible implementations of the first aspect, in a third possible implementation of the first aspect, the preset threshold includes a packet quantity threshold and/or a total-packet length threshold, and configuration information of the preset threshold is sent by the base station to the terminal by using radio resource control signaling or Media Access Control signaling.

The base station configures threshold information and delivers the threshold information by using existing signaling, so that no new signaling needs to be constructed, thereby reducing signaling resources.

With reference to the implementation of the first aspect, in a fourth possible implementation of the first aspect, if it is detected that the first logical channel does not include the first to-be-transmitted data, there is one second tunnel, a quantity of packets on the logical channel in the second tunnel is less than a preset quantity, and a packet length is less than a preset length, the second tunnel is selected to transmit the second to-be-transmitted data.

When there is one second tunnel, the second tunnel may be selected for transmission provided that it is ensured that quantities and lengths of packets on all logical channels in the tunnel meet preset requirements, thereby saving resources and improving transmission efficiency.

With reference to the implementation of the first aspect, in a fifth possible implementation of the first aspect, if it is detected that the first logical channel does not include the first to-be-transmitted data, there are at least two second tunnels, a total quantity of packets on a logical channel in each second tunnel is less than a preset quantity, and a sum of lengths of the packets on the logical channel in each second tunnel is less than a preset length, the second tunnel is selected to transmit the second to-be-transmitted data.

When there are two or more second tunnels, the second tunnel may be selected for transmission provided that it is ensured that quantities and lengths of packets on all logical channels in each tunnel meet preset requirements, thereby saving resources and improving transmission efficiency.

With reference to the fifth possible implementation of the first aspect, in a sixth possible implementation of the first aspect, packets on the logical channels in the at least two second tunnels are mapped onto a same transport channel in a second tunnel for transmission.

With reference to the implementation of the first aspect, in a seventh possible implementation of the first aspect, after the transmitting data by using the second tunnel, the method further includes:
receiving a transmission result fed back by a base station, where the transmission result that is fed back is transmitted by using the second tunnel.

A feedback mechanism is added, so that the terminal can learn the transmission result, and the transmission result is transmitted by using the second tunnel, thereby also saving resources and improving efficiency.

With reference to the implementation of the first aspect, in an eighth possible implementation of the first aspect, when the terminal is in the energy saving state, both the terminal and the base station store a context of the terminal, the base station maintains a connection to a core network, and the base station allocates no resource to the terminal.

The dedicated second tunnel is provided for the terminal in the energy saving state to transmit relatively small data, and therefore no random access needs to be performed. In this way, resources can be reduced, and transmission efficiency can be improved.

According to a second aspect of the present invention, a terminal is provided, including:
a detection unit, configured to: when the terminal is in an energy saving state, detect whether a first logical channel corresponding to a first tunnel includes first to-be-transmitted data, and detect whether a second logical channel corresponding to a second tunnel includes second to-be-transmitted data;
a selection unit, configured to: if it is detected that the first logical channel includes the first to-be-transmitted data, and a sum of the first to-be-transmitted data and the second to-be-transmitted data on the second logical channel is less than a preset threshold, select the second tunnel to transmit the first to-be-transmitted data and the second to-be-transmitted data; or if it is detected that the first logical channel does not include the first to-be-transmitted data, and the second to-be-transmitted data on the second logical channel is less than a preset threshold, select the second tunnel to transmit the second to-be-transmitted data; and
a transmission unit, configured to transmit data by using the second tunnel.

With reference to the implementation of the second aspect, in a first possible implementation of the second aspect, the selection unit is further configured to:
if a base station supports the terminal in transmitting data by using the second tunnel when the terminal is in a connected state, and the terminal is currently not synchronized with the base station, when to-be-transmitted data is less than the preset threshold, select the second tunnel to transmit the to-be-transmitted data; or
if the terminal is in a connected state and is currently synchronized with a base station, when to-be-transmitted data is less than the preset threshold, select the second tunnel to transmit the to-be-transmitted data.

With reference to the implementation of the second aspect, in a second possible implementation of the second aspect,
the detection unit is further configured to:
determine a size of data on the first logical channel and a size of data on the second logical channel; and
the selection unit is further configured to:
   when a sum of the data on the first logical channel and the data on the second logical channel is less than the preset threshold, if the terminal is in a connected state and is currently not synchronized with a base station, or is in an idle state, or is in the energy saving state, or needs to obtain a transmission resource by using a random access procedure because no uplink transmission resource is available, select the second tunnel to transmit data; or
   if the terminal is in a connected state and is currently synchronized with a base station, select the first tunnel or the second tunnel to transmit data.

With reference to the second aspect, or the first or the second possible implementation of the second aspect, in a third possible implementation of the second aspect, the preset threshold includes a packet quantity threshold and/or a total-packet length threshold, and configuration information of the preset threshold is sent by the base station to the terminal by using radio resource control signaling or Media Access Control signaling.

With reference to the implementation of the second aspect, in a fourth possible implementation of the second aspect, the selection unit is further configured to:
if it is detected that the first logical channel does not include the first to-be-transmitted data, there is one second tunnel, a quantity of packets on the second logical channel is less than a preset quantity, and a packet length is less than a preset length, select the second tunnel to transmit the second to-be-transmitted data.

With reference to the implementation of the second aspect, in a fifth possible implementation of the second aspect, the selection unit is further configured to:
if it is detected that the first logical channel does not include the first to-be-transmitted data, there are at least two second tunnels, a total quantity of packets on a logical channel in each second tunnel is less than a preset quantity, and a sum of lengths of the packets on the second logical channel corresponding to each second tunnel is less than a preset length, select the second tunnel to transmit the second to-be-transmitted data.

With reference to the fifth possible implementation of the second aspect, in a sixth possible implementation of the second aspect, packets on the logical channels in the at least two second tunnels are mapped onto a same transport channel in a second tunnel for transmission.

With reference to the implementation of the second aspect, in a seventh possible implementation of the second aspect, the terminal further includes:
a feedback unit, configured to receive, by using the second tunnel, a transmission result fed back by a base station.

With reference to the implementation of the second aspect, in an eighth possible implementation of the second aspect, when the terminal is in the energy saving state, both the terminal and the base station store a context of the terminal, the base station maintains a connection to a core network, and the base station allocates no resource to the terminal.

According to a third aspect of the embodiments of the present invention, a terminal is provided, including:
a processor, a memory, an interface circuit, and a bus, where the processor, the memory, and the interface circuit are connected by using the bus, the interface circuit is used by the terminal to perform communication and data transmission with a base station, the memory is configured to store a set of program code, and the processor is configured to invoke the program code stored in the memory to perform the following operations:
when the terminal is in an energy saving state, detecting whether a first logical channel corresponding to a first tunnel includes first to-be-transmitted data, and detecting whether a second logical channel corresponding to a second tunnel includes second to-be-transmitted data;
if it is detected that the first logical channel includes the first to-be-transmitted data, and a sum of the first to-be-transmitted data and the second to-be-transmitted data on the second logical channel is less than a preset threshold, selecting the second tunnel to transmit the first to-be-transmitted data and the second to-be-transmitted data; or if it is detected that the first logical channel does not include the first to-be-transmitted data, and the second to-be-transmitted data on the second logical channel is less than a preset threshold, selecting the second tunnel to transmit the second to-be-transmitted data; and transmitting data by using the second tunnel.

With reference to the implementation of the third aspect, in a first possible implementation of the third aspect, the processor is further configured to:
if the base station supports the terminal in transmitting data by using the second tunnel when the terminal is in a connected state, and the terminal is currently not synchronized with the base station, when to-be-transmitted data is less than the preset threshold, select, by the terminal, the second tunnel to transmit the to-be-transmitted data; or
if the terminal is in a connected state and is currently synchronized with the base station, when to-be-transmitted data is less than the preset threshold, select, by the terminal, the second tunnel to transmit the to-be-transmitted data.

With reference to the implementation of the third aspect, in a second possible implementation of the third aspect, the processor is further configured to:
determine a size of data on the first logical channel and a size of data on the second logical channel; and
when a sum of the data on the first logical channel and the data on the second logical channel is less than the preset threshold,
if the terminal is in a connected state and is currently not synchronized with the base station, or is in an idle state, or is in the energy saving state, or needs to obtain a transmission resource by using a random access procedure because no uplink transmission resource is available, select the second tunnel to transmit data; or
if the terminal is in a connected state and is currently synchronized with the base station, select the first tunnel or the second tunnel to transmit data.

With reference to any one of the third aspect, or the first and the second possible implementations of the third aspect, in a third possible implementation of the third aspect, the preset threshold includes a packet quantity threshold and/or a total-packet length threshold, and configuration information of the preset threshold is sent by the base station to the terminal by using radio resource control signaling or Media Access Control signaling.

With reference to the implementation of the third aspect, in a fourth possible implementation of the third aspect, the processor is further configured to:
if it is detected that the first logical channel does not include the first to-be-transmitted data, there is one second tunnel, a quantity of packets on the second logical channel is less than a preset quantity, and a packet length is less than a preset length, select the second tunnel to transmit the second to-be-transmitted data.

With reference to the implementation of the third aspect, in a fifth possible implementation of the third aspect, the processor is further configured to:
if it is detected that the first logical channel does not include the first to-be-transmitted data, there are at least two second tunnels, a total quantity of packets on a second logical channel corresponding to each second tunnel is less than a preset quantity, and a sum of lengths of the packets on the second logical channel corresponding to each second tunnel is less than a preset length, select the second tunnel to transmit the second to-be-transmitted data.

With reference to the fifth possible implementation of the third aspect, in a sixth possible implementation of the third aspect, the processor is further configured to:
map packets on the logical channels in the at least two second tunnels onto a same transport channel in a second tunnel for transmission.

With reference to the implementation of the third aspect, in a seventh possible implementation of the third aspect, the processor is further configured to:
receive, by using the second tunnel, a transmission result fed back by the base station.

With reference to the implementation of the third aspect, in an eighth possible implementation of the third aspect, when the terminal is in the energy saving state, both the terminal and the base station store a context of the terminal, the base station maintains a connection to a core network, and the base station allocates no resource to the terminal.

According to a fourth aspect, the present invention provides a computer storage medium, where the computer storage medium includes a set of program code used to perform the method according to any implementation of the first aspect of the present invention.

### BRIEF DESCRIPTION OF DRAWINGS

To describe the technical solutions in the embodiments of the present invention more clearly, the following briefly describes the accompanying drawings required for describing the embodiments. Apparently, the accompanying drawings in the following description show merely some embodiments of the present invention, and a person of ordinary skill in the art may still derive other drawings from these accompanying drawings without creative efforts.
FIG. 1 is a schematic diagram of a system architecture according to an embodiment of the present invention;
FIG. 2 is a schematic diagram of an interaction process of a data transmission method according to a first embodiment of the present invention;
FIG. 3 is a schematic diagram of an interaction process of a data transmission method according to a second embodiment of the present invention;
FIG. 4 is a schematic structural diagram of a terminal according to a first embodiment of the present invention;
FIG. 5 is a schematic structural diagram of a terminal according to a second embodiment of the present invention; and
FIG. 6 is a schematic structural diagram of a terminal according to a third embodiment of the present invention.

### DESCRIPTION OF EMBODIMENTS

The following clearly and completely describes the technical solutions in the embodiments of the present invention with reference to the accompanying drawings in the embodiments of the present invention. Apparently, the described embodiments are some rather than all of the embodiments of the present invention. All other embodiments obtained by a person of ordinary skill in the art based on the embodiments of the present invention without creative efforts shall fall within the protection scope of the present invention.

The terms "comprise", "include", and any other variants in the specification, claims, and accompanying drawings of the present invention are intended to cover the non-exclusive inclusion. For example, a process, a method, a system, a product, or a device that includes a series of steps or units is not limited to the listed steps or units, but optionally further includes an unlisted step or unit, or optionally further includes another inherent step or unit of the process, the method, the product, or the device.

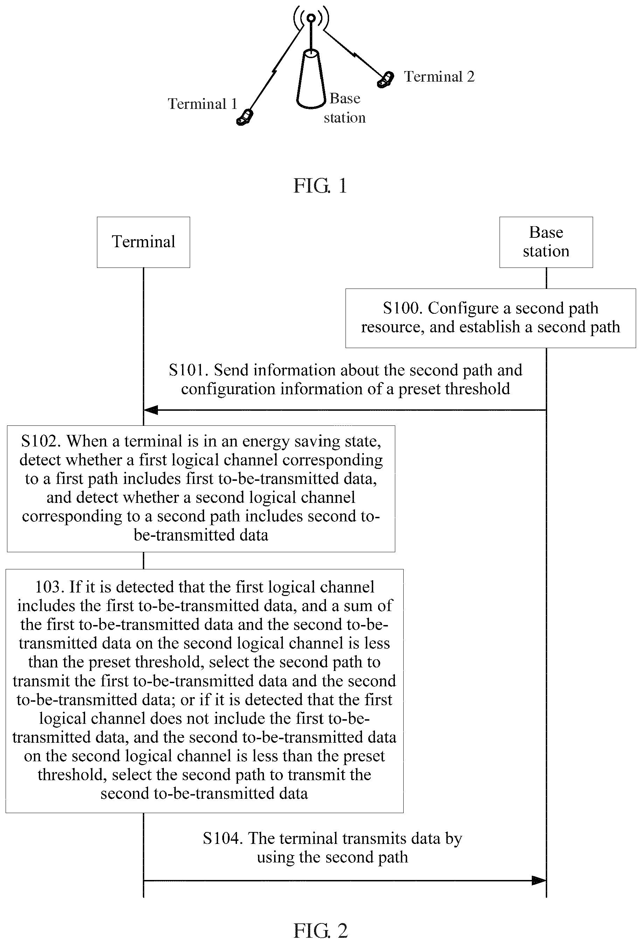

A system architecture in an embodiment of the present invention is shown in FIG. 1. A base station may perform communication and data transmission with terminals such as a terminal 1 and a terminal 2.

The base station in this embodiment of the present invention may complete data transmission with the terminal by using a conventional tunnel, namely, a first tunnel described below, and a dedicated tunnel used to transmit relatively small data in the embodiments of the present invention, namely, a second tunnel described below. In addition, the base station allocates a dedicated tunnel resource (including a time domain resource, a link resource, and the like) to the terminal, and delivers configuration information related to transmission tunnel selection to the terminal, for example, information about a preset threshold related to a data size. The configuration information may include a total length of to-be-transmitted data, a packet quantity, a total packet length, and the like.

The terminal in this embodiment of the present invention may include a smartphone (such as an Android mobile phone, an iOS mobile phone, or a Windows Phone mobile phone), a tablet computer, a palmtop computer, a notebook computer, a mobile Internet device (Mobile Internet Device, MID for short), a wearable device, or the like. The foregoing terminals are merely examples rather than exhaustive, and the terminal includes but is not limited to the foregoing terminals. A signal transceiver module is disposed on the terminal, and the terminal may maintain a connection to the base station by using a wireless network. The terminal has a plurality of operating statuses such as an idle state and a connected state. When the terminal is in the idle state, the terminal is not connected to the base station, and the base station allocates no resource to the terminal. When the terminal is in the connected state, both the terminal and the base station store a context of the terminal, the base station maintains a connection to a core network, the base station allocates a resource to the terminal, and the terminal can use the resource to perform data transmission and the like. Certainly, an energy saving state of the terminal is also introduced in this embodiment of the present invention. It should be noted that when the terminal is in the energy saving state, both the terminal and the base station store the context of the terminal, the base station maintains a connection to the core network, and the base station allocates no resource to the terminal. The energy saving state may be a substate of the idle state or the connected state, or may exist as an independent state. This is not limited in this embodiment of the present invention. In addition, the terminal in this embodiment of the present invention may perform data transmission with the base station by using the conventional tunnel, namely, the first tunnel described below, or perform data transmission by using the dedicated tunnel, namely, the second tunnel described below.

It should be noted that the first tunnel is a conventional transmission tunnel between the base station and the terminal. The second tunnel is a concept in a network category, is not only applied to an air interface, but also applied to a network side. The second tunnel is an end-to-end concept. In other words, the second tunnel includes a wireless tunnel of the air interface and a network transmission tunnel. In addition, there may be one or more second tunnels for each base station. When there are a plurality of second tunnels, the second tunnels may be classified based on application. To be specific, there may be one second tunnel for one application, or a plurality of applications may share one second tunnel. From the perspective of allocation of physical resources on the air interface, resources of a same tunnel may be contiguous, or may be discrete, and are distributed on different time-frequency resource blocks. The second tunnel is used to transmit relatively small data that is to be discontinuously transmitted, and the second tunnel may be used to transmit user data of a terminal in the idle state, the energy saving state, or even the connected state.

The following describes in detail a data transmission method in the present invention with reference to specific embodiments.

FIG. 2 is a schematic diagram of an interaction process of a data transmission method according to a first embodiment of the present invention. The method includes the following steps:
S100. A base station configures a second tunnel resource, and establishes a second tunnel.

The second tunnel resource herein includes a time domain resource and a link resource, and information related to a preset threshold may be further configured during establishment of the second tunnel.

S101. Send information about the second tunnel and configuration information of a preset threshold to a terminal, so that the terminal selects a proper tunnel to transmit data.

S102. When the terminal is in an energy saving state, the terminal detects whether a first logical channel corresponding to a first tunnel includes first to-be-transmitted data, and detects whether a second logical channel corresponding to the second tunnel includes second to-be-transmitted data.

In the energy saving state, the terminal may be in a dormant mode or a mode similar to a dormant mode, and may be woken up when receiving a specific message.

S103. If it is detected that the first logical channel includes the first to-be-transmitted data, and a sum of the first to-be-transmitted data and the second to-be-transmitted data on the second logical channel is less than the preset threshold, select the second tunnel to transmit the first to-be-transmitted data and the second to-be-transmitted data; or if it is detected that the first logical channel does not include the first to-be-transmitted data, and the second to-be-transmitted data on the second logical channel is less than the preset threshold, select the second tunnel to transmit the second to-be-transmitted data.

S104. The terminal transmits data by using the second tunnel. When first to-be-transmitted data needs to be transmitted, the first tunnel usually should be used for transmission, and when relatively small second to-be-transmitted data needs to be transmitted, the second tunnel may be used for transmission. Certainly, if the first to-be-transmitted data is also relatively small, and a sum of the first to-be-transmitted data and the second to-be-transmitted data is still less than the preset threshold, the second tunnel may be used to transmit the first to-be-transmitted data and the second to-be-transmitted data.

It should be understood that the terminal in this embodiment of the present invention is configured to receive a dedicated tunnel resource (including a time domain resource, a link resource, and the like) allocated by the base station, and establish a second tunnel for a connection to the base station.

If it is detected that the first logical channel does not include the first to-be-transmitted data, there is one second tunnel, a quantity of packets on the second logical channel is less than a preset quantity, and a packet length is less than a preset length, the second tunnel is selected to transmit the second to-be-transmitted data. It should be noted that the second logical channel herein is a generic term. One second tunnel may include a plurality of second logical channels. When a sum of quantities of packets on the plurality of second logical channels is less than the preset quantity, and a sum of lengths of the packets is less than the preset length, the second tunnel may be selected to transmit the second to-be-transmitted data.

If it is detected that the first logical channel does not include the first to-be-transmitted data, there are at least two second tunnels, a total quantity of packets on a second logical channel corresponding to each second tunnel is less than a preset quantity, and a sum of lengths of the packets on the second logical channel corresponding to each second tunnel is less than a preset length, the second tunnel is selected to transmit the second to-be-transmitted data.

It should be noted that if there are at least two second tunnels, and the foregoing condition is not met, the first tunnel is selected to transmit the second to-be-transmitted data, and the second to-be-transmitted data may be mapped onto the first tunnel for transmission.

A preset quantity threshold or length threshold may be defined by using a protocol, or may be a variable value defined for each second tunnel, that is, preset thresholds for second tunnels may be different. Packets on the logical channels in the at least two second tunnels are mapped onto a same transport channel in a second tunnel for transmission.

If data on a logical channel in each second tunnel is transmitted by using the second tunnel, processes of mapping from the logical channel onto a physical channel are independent, that is, mapping from each logical channel onto a transport channel and mapping from the transport channel onto a physical channel are separately independent. If data on a logical channel in the second tunnel is transmitted by using the first tunnel, a shared channel of a transport channel and a physical shared channel are used for transmission. In this case, a data transmission mode is a multiplexing transmission mode like a conventional data transmission mode.

After the terminal determines to use the second tunnel for transmission, a transmission mode of the terminal may be a contention-based manner, including carrier sense/conflict detection, code division multiplexing, and the like, and these manners each may be defined by using a protocol.

When users in a cell share a second tunnel, it is necessary to determine how to allocate a resource and how the terminal selects one of second tunnel resources for transmission. For example, in an LTE system, a PRB having a normal cyclic prefix (CP) includes 12 subcarriers and 7 symbols. When allocating a resource to the second tunnel, the system may allocate a plurality of physical resource blocks. In this embodiment of the present invention, four PRBs may be allocated. The PRBs may be classified into two groups if two PRBs need to be used for each second tunnel. It is assumed that a PRB 1 and a PRB 2 may be used by one user for transmission, a PRB 3 and a PRB 4 may be used by another user for transmission, and a resource block including the PRB 1 and the PRB 2 is a URB (Chinese: User Resource Block). In an actual system, a plurality of URBs may be allocated to the second tunnel at a time. Therefore, when selecting an uplink transmission resource, a user needs to select, for transmission, one resource block from the plurality of URBs randomly or according to a specific preset rule. There may be various selection rules for a resource block. However, the selection rule needs to ensure that selection results for terminals are distributed as evenly as possible without causing conflicts. Certainly, the selection herein includes not only allocation of a single subframe (or contiguous subframes), but also time domain allocation, because the second tunnel resource is periodically scheduled in time domain.

It should be understood that after the transmitting data by using the second tunnel, the method further includes:
receiving, by the terminal by using the second tunnel, a transmission result fed back by the base station. In another implementation of this embodiment of the present invention, if the base station feeds back the transmission result, the base station needs to feed back the transmission result on a resource of a downlink second tunnel. If the system uses a contention-based manner like in WiFi, no dedicated feedback resource is required. In this case, the base station may select a resource block for feedback transmission, and an identifier that can be used to identify the terminal needs to be included during the feedback transmission. If a frequency division duplex mode is used, a downlink resource block is selected for transmission. The terminal needs to continuously monitor the downlink resource block in a specific period of time to obtain feedback information. Feedback information of a plurality of users may be transmitted on a same URB. If the user receives a NACK feedback, the system performs automatic retransmission for N times. For example, N is 4. Certainly, the system may not perform any feedback, but an application layer performs automatic retransmission. This depends on a system design. If the application layer performs retransmission, an underlying layer does not need to perform a feedback or retransmission.

Optionally, in addition to the terminal in the energy saving state, the second tunnel may also be used for data transmission for a terminal in a connected state.

Specifically, if the base station supports the terminal in transmitting data by using the second tunnel when the terminal is in the connected state, and the terminal is currently not synchronized with the base station, when to-be-transmitted data is less than the preset threshold, the terminal selects the second tunnel to transmit the to-be-transmitted data; or
if the terminal is in the connected state and is currently synchronized with the base station, when to-be-transmitted data is less than the preset threshold, the terminal selects the second tunnel to transmit the to-be-transmitted data.

To be specific, when the system configures the second tunnel, a user in the connected state may also transmit noncontiguous small packets. In a possible case, when the user is in the connected state, the terminal releases an uplink transmission resource after the user becomes not synchronized with the base station because the user has no data to transmit for a long time. When the user needs to transmit data, in the LTE system, the user can perform uplink transmission only after the user becomes synchronized with the base station by using a random access procedure. This process does not help save signaling overheads of the system. In addition, more power consumption is caused because of the random access procedure. Therefore, data transmission may be performed by using the method in this embodiment.

Still further, if the terminal is in the connected state and is currently synchronized with the base station, when the terminal needs to send application data that is to be discontinuously transmitted and whose length is less than a preset threshold, in other words, if the second to-be-transmitted data on the logical channel in the second tunnel is less than the preset threshold, the second tunnel is selected for transmission.

The preset threshold includes a packet quantity threshold and/or a total-packet length threshold. The configuration information of the preset threshold is sent by the base station to the terminal by using radio resource control signaling or Media Access Control signaling. After receiving threshold configuration information sent by the base station, the terminal may perform threshold configuration based on the configuration information. A specific parameter of the threshold may be defined in a communications protocol, or may be adaptively configured by the base station based on factors such as a current network status, or may be even defined by a user. This is not limited in this embodiment of the present invention. In addition to the preset threshold, the foregoing method may also be used to configure and/or transmit configuration information for the preset threshold and a first preset threshold for the application data that is to be discontinuously transmitted and whose length is less than the preset threshold. According to the data transmission method in this embodiment of the present invention, terminals in the energy saving state and the connected state may select a dedicated tunnel to transmit application data that is to be discontinuously transmitted and whose length is less than a preset threshold. Therefore, according to the method, network resources can be saved, and data transmission efficiency can be effectively improved.

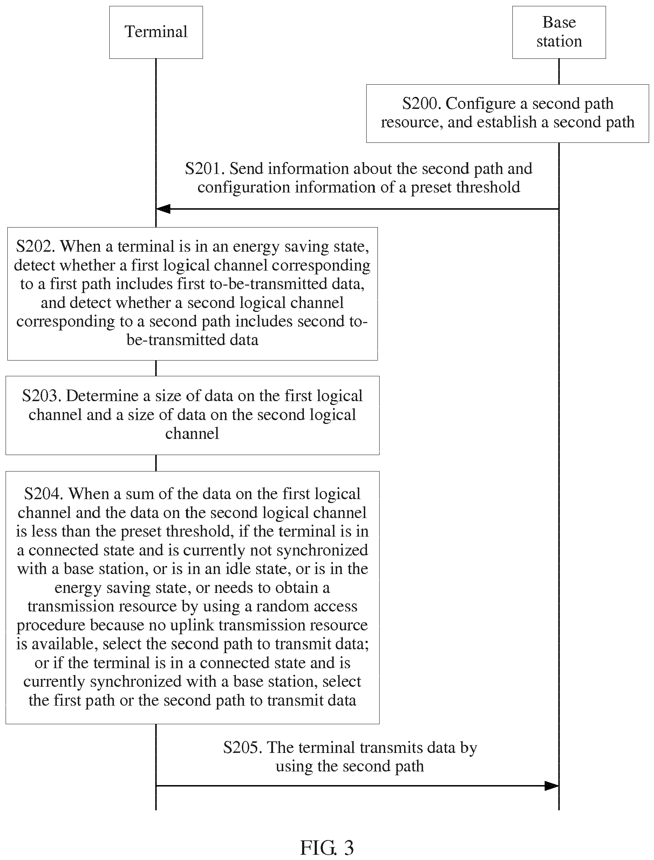

FIG. 3 is a schematic diagram of an interaction process of a data transmission method according to a second embodiment of the present invention. The method includes the following steps:
S200. A base station configures a second tunnel resource, and establishes a second tunnel.

The second tunnel resource herein includes a time domain resource and a link resource, and information related to a preset threshold may be further configured during establishment of the second tunnel.

S201. Send information about the second tunnel and configuration information of a preset threshold to a terminal, so that the terminal selects a proper tunnel to transmit data.

S202. When the terminal is in an energy saving state, the terminal detects whether a first logical channel corresponding to a first tunnel includes first to-be-transmitted data, and detects whether a second logical channel corresponding to the second tunnel includes second to-be-transmitted data.

S203. The terminal determines a size of data on the first logical channel and a size of data on the second logical channel.

S204. When a sum of the data on the first logical channel and the data on the second logical channel is less than the preset threshold, if the terminal is in a connected state and is currently not synchronized with the base station, or is in an idle state, or is in the energy saving state, or needs to obtain a transmission resource by using a random access procedure because no uplink transmission resource is available, select the second tunnel to transmit data.

S205. When the sum of the data on the first logical channel and the data on the second logical channel is less than the preset threshold, if the terminal is in the connected state and is currently synchronized with the base station, select the first tunnel or the second tunnel to transmit data.

It should be noted that the second tunnel is a concept in a network category, and is not only applied to an air interface, but also applied to a network side. The second tunnel is an end-to-end concept. In other words, the second tunnel includes a wireless tunnel of the air interface and a network transmission tunnel. In addition, there may be one or more second tunnels for each base station. When there are a plurality of second tunnels, the second tunnels may be classified based on application. To be specific, there may be one second tunnel for one application, or a plurality of applications may share one second tunnel. From the perspective of allocation of physical resources on the air interface, resources of a same tunnel may be contiguous, or may be discrete, and are distributed on different time-frequency resource blocks. The second tunnel may be used to transmit user data in the idle state, the energy saving state, or even the connected state.

According to the data transmission method in this embodiment of the present invention, determining is performed based only on a size of a packet and a terminal status and whether the packet comes from a logical channel in the second tunnel or a logical channel in the first tunnel is not determined. Terminals in the energy saving state and the connected state may select a dedicated tunnel to transmit application data that is to be discontinuously transmitted and whose length is less than a preset threshold. Therefore, according to the method, network resources can be saved, and data transmission efficiency can be effectively improved.

FIG. 3 is a schematic structural diagram of a terminal according to a first embodiment of the present invention. The terminal in this embodiment of the present invention receives a dedicated tunnel resource (including a time domain resource, a link resource, and the like) allocated by a base station, and establishes a dedicated tunnel for a connection to the base station. The terminal in this embodiment of the present invention includes a detection unit 100, a selection unit 200, and a transmission unit 300.

The detection unit 100 is configured to: when the terminal is in an energy saving state, detect whether a first logical channel corresponding to a first tunnel includes first to-be-transmitted data, and detect whether a second logical channel corresponding to a second tunnel includes second to-be-transmitted data.

The selection unit 200 is configured to: if it is detected that the first logical channel includes the first to-be-transmitted data, and a sum of the first to-be-transmitted data and the second to-be-transmitted data on the second logical channel is less than a preset threshold, select the second tunnel to transmit the first to-be-transmitted data and the second to-be-transmitted data; or if it is detected that the first logical channel does not include the first to-be-transmitted data, and the second to-be-transmitted data on the second logical channel is less than a preset threshold, select the second tunnel to transmit the second to-be-transmitted data.

The transmission unit 300 is configured to transmit data by using the second tunnel.

Optionally, the selection unit 200 is further configured to:
if the base station supports the terminal in transmitting data by using the second tunnel when the terminal is in a connected state, and the terminal is currently not synchronized with the base station, when to-be-transmitted data is less than the preset threshold, select the second tunnel to transmit the to-be-transmitted data; or
if the terminal is in a connected state and is currently synchronized with the base station, when to-be-transmitted data is less than the preset threshold, select the second tunnel to transmit the to-be-transmitted data.

Optionally, the detection unit 100 is further configured to:
determine a size of data on the first logical channel and a size of data on the second logical channel.

The selection unit 200 is further configured to:
when a sum of the data on the first logical channel and the data on the second logical channel is less than the preset threshold, if the terminal is in a connected state and is currently not synchronized with the base station, or is in an idle state, or is in the energy saving state, or needs to obtain a transmission resource by using a random access procedure because no uplink transmission resource is available, select the second tunnel to transmit data; or
if the terminal is in a connected state and is currently synchronized with the base station, select the first tunnel or the second tunnel to transmit data.

The preset threshold includes a packet quantity threshold and/or a total-packet length threshold, and configuration information of the preset threshold is sent by the base station to the terminal by using radio resource control signaling or Media Access Control signaling.

Specifically, the selection unit 200 is further configured to:
if it is detected that the first logical channel does not include the first to-be-transmitted data, there is one second tunnel, a quantity of packets on the second logical channel is less than a preset quantity, and a packet length is less than a preset length, select the second tunnel to transmit the second to-be-transmitted data.

The selection unit 200 is further configured to:
if it is detected that the first logical channel does not include the first to-be-transmitted data, there are at least two second tunnels, a total quantity of packets on a logical channel in each second tunnel is less than a preset quantity, and a sum of lengths of the packets on the second logical channel corresponding to each second tunnel is less than a preset length, select the second tunnel to transmit the second to-be-transmitted data.

Packets on the logical channels in the at least two second tunnels are mapped onto a same transport channel in a second tunnel for transmission.

When the terminal is in the energy saving state, both the terminal and the base station store a context of the terminal, the base station maintains a connection to a core network, and the base station allocates no resource to the terminal.

The terminal in this embodiment of the present invention may select, in the energy saving state and the connected state, a dedicated tunnel to transmit application data that is to be discontinuously transmitted and whose length is less than a preset threshold. Therefore, network resources can be saved, and data transmission efficiency can be effectively improved.

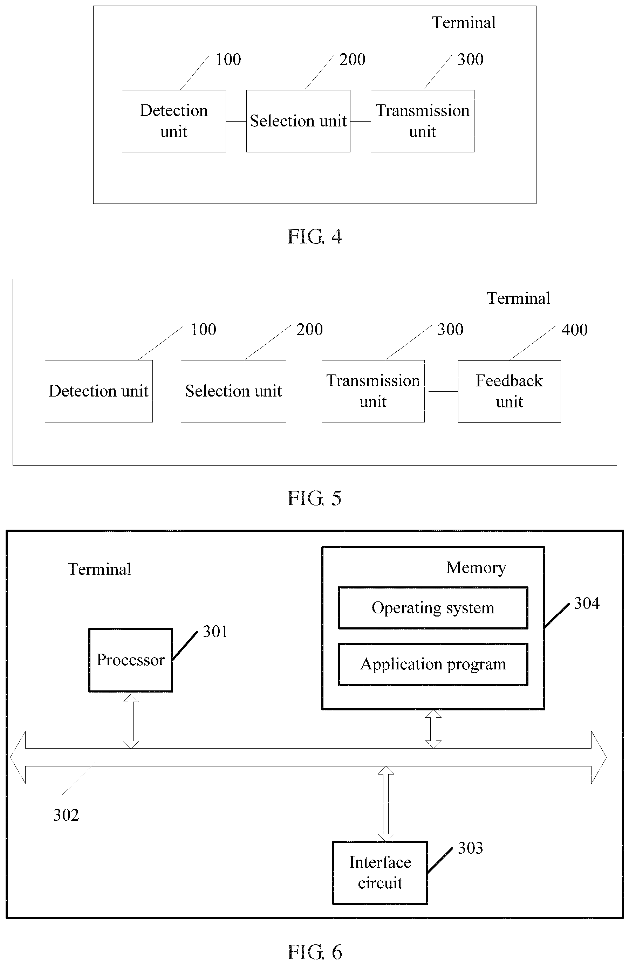

FIG. 5 is a schematic structural diagram of a terminal according to a second embodiment of the present invention. The terminal shown in FIG. 5 is obtained by optimizing the terminal shown in FIG. 4. In addition to the units included in the terminal shown in FIG. 4, the apparatus shown in FIG. 5 includes:
a feedback unit 400, configured to receive, by using the second tunnel, a transmission result fed back by the base station.

According to the terminal in this embodiment of the present invention, the feedback unit is added, so that the transmission result of the second tunnel can be clearly learned, and the result is transmitted by using the second tunnel. Therefore, network resources can also be saved, and data transmission efficiency can also be effectively improved.

FIG. 6 is a schematic structural diagram of a terminal according to a third embodiment of the present invention. The terminal includes:
a processor 301, a memory 304, an interface circuit 303, and a bus 302, where the processor 301, the memory 304, and the interface circuit 303 are connected by using the bus 302, the interface circuit 303 is used by the terminal to perform communication and data transmission with a base station, the memory 304 is configured to store a set of program code, and the processor 301 is configured to invoke the program code stored in the memory to perform the following operations:
when the terminal is in an energy saving state, detecting whether a first logical channel corresponding to a first tunnel includes first to-be-transmitted data, and detecting whether a second logical channel corresponding to a second tunnel includes second to-be-transmitted data;
if it is detected that the first logical channel includes the first to-be-transmitted data, and a sum of the first to-be-transmitted data and the second to-be-transmitted data on the second logical channel is less than a preset threshold, selecting the second tunnel to transmit the first to-be-transmitted data and the second to-be-transmitted data; or if it is detected that the first logical channel does not include the first to-be-transmitted data, and the second to-be-transmitted data on the second logical channel is less than a preset threshold, selecting the second tunnel to transmit the second to-be-transmitted data; and transmitting, by the terminal, data by using the second tunnel.

Optionally, the processor 301 is further configured to:
if the base station supports the terminal in transmitting data by using the second tunnel when the terminal is in a connected state, and the terminal is currently not synchronized with the base station, when to-be-transmitted data is less than the preset threshold, select, by the terminal, the second tunnel to transmit the to-be-transmitted data; or
if the terminal is in a connected state and is currently synchronized with the base station, when to-be-transmitted data is less than the preset threshold, select, by the terminal, the second tunnel to transmit the to-be-transmitted data.

Optionally, the processor 301 is further configured to:
determine a size of data on the first logical channel and a size of data on the second logical channel; and
when a sum of the data on the first logical channel and the data on the second logical channel is less than the preset threshold,
if the terminal is in a connected state and is currently not synchronized with the base station, or is in an idle state, or is in the energy saving state, or needs to obtain a transmission resource by using a random access procedure because no uplink transmission resource is available, select the second tunnel to transmit data; or
if the terminal is in a connected state and is currently synchronized with the base station, select the first tunnel or the second tunnel to transmit data.

The preset threshold includes a packet quantity threshold and/or a total-packet length threshold, and configuration information of the preset threshold is sent by the base station to the terminal by using radio resource control signaling or Media Access Control signaling.

Optionally, the processor 301 is further configured to:
if it is detected that the first logical channel does not include the first to-be-transmitted data, there is one second tunnel, a quantity of packets on the second logical channel is less than a preset quantity, and a packet length is less than a preset length, select the second tunnel to transmit the second to-be-transmitted data.

Optionally, the processor 301 is further configured to:
if it is detected that the first logical channel does not include the first to-be-transmitted data, there are at least two second tunnels, a total quantity of packets on a second logical channel corresponding to each second tunnel is less than a preset quantity, and a sum of lengths of the packets on the second logical channel corresponding to each second tunnel is less than a preset length, select the second tunnel to transmit the second to-be-transmitted data.

Optionally, the processor 301 is further configured to:
map packets on logical channels in the at least two second tunnels onto a same transport channel in a second tunnel for transmission.

Optionally, the processor 301 is further configured to:
receive, by using the second tunnel, a transmission result fed back by the base station.

When the terminal is in the energy saving state, both the terminal and the base station store a context of the terminal, the base station maintains a connection to a core network, and the base station allocates no resource to the terminal.

The terminal described in this embodiment may be configured to implement some or all of the processes in the method embodiments described in the present invention with reference to FIG. 1 and FIG. 2, and perform some or all of the functions in the apparatus embodiments described in the present invention with reference to FIG. 3 and FIG. 4. Details are not described herein again.

A person of ordinary skill in the art may understand that each aspect of the present invention or a possible implementation of each aspect may be specifically implemented as a system, a method, or a computer program product. In addition, each aspect of the present invention or the possible implementation of each aspect may take a form of a computer program product, and the computer program product is computer-readable program code stored in a computer-readable medium.

The computer-readable medium may be a computer-readable data medium or a computer-readable storage medium. The computer-readable storage medium includes but is not limited to an electronic, magnetic, optical, electromagnetic, infrared, or semi-conductive system, device, or apparatus, or any appropriate combination thereof, such as a random access memory (RAM), a read-only memory (ROM), an erasable programmable read only memory (EPROM or flash memory), an optical fiber, or a compact disc read only memory (CD-ROM).

A processor in a computer reads computer-readable program code stored in the computer-readable medium, so that the processor can perform a function and an action specified in each step or a combination of steps in a flowchart; an apparatus is generated to implement a function and an action specified in each block or a combination of blocks in a block diagram.

All computer-readable program code may be executed on a user computer, or some may be executed on a user computer as a standalone software package, or some may be executed on a local computer of a user while some is executed on a remote computer, or all the code may be executed on a remote computer or a server. It should also be noted that, in some alternative implementation solutions, each step in the flowcharts or functions specified in each block in the block diagrams may not occur in the illustrated order. For example, two consecutive steps or two blocks in the illustration, which are dependent on a related function, may actually be executed substantially at the same time, or these blocks may sometimes be executed in reverse order.

Obviously, a person skilled in the art can make various modifications and variations to the present invention without departing from the spirit and scope of the present invention. The present invention is intended to cover these modifications and variations provided that they fall within the scope of protection defined by the following claims and their equivalent technologies.

## Claims

1. A data transmission method, comprising:
when a terminal is in an energy saving state, detecting, by the terminal, whether a first logical channel corresponding to a first tunnel comprises first to-be-transmitted data, and detecting whether a second logical channel corresponding to a second tunnel comprises second to-be-transmitted data;
if it is detected that the first logical channel comprises the first to-be-transmitted data, and a sum of the first to-be-transmitted data and the second to-be-transmitted data on the second logical channel is less than a preset threshold, selecting the second tunnel to transmit the first to-be-transmitted data and the second to-be-transmitted data; or if it is detected that the first logical channel does not comprise the first to-be-transmitted data, and the second to-be-transmitted data on the second logical channel is less than a preset threshold, selecting the second tunnel to transmit the second to-be-transmitted data; and
transmitting, by the terminal, data by using the second tunnel.

2. The method according to claim 1, wherein if a base station supports the terminal in transmitting data by using the second tunnel when the terminal is in a connected state, and the terminal is currently not synchronized with the base station, when to-be-transmitted data is less than the preset threshold, the terminal selects the second tunnel to transmit the to-be-transmitted data; or
if the terminal is in a connected state and is currently synchronized with a base station, when to-be-transmitted data is less than the preset threshold, the terminal selects the second tunnel to transmit the to-be-transmitted data.

3. The method according to claim 1, further comprising:
determining, by the terminal, a size of data on the first logical channel and a size of data on the second logical channel; and
when a sum of the data on the first logical channel and the data on the second logical channel is less than the preset threshold,
if the terminal is in a connected state and is currently not synchronized with a base station, or is in an idle state, or is in the energy saving state, or needs to obtain a transmission resource by using a random access procedure because no uplink transmission resource is available, selecting the second tunnel to transmit data; or
if the terminal is in a connected state and is currently synchronized with a base station, selecting the first tunnel or the second tunnel to transmit data.

4. The method according to any one of claims 1 to 3, wherein the preset threshold comprises a packet quantity threshold and/or a total-packet length threshold, and configuration information of the preset threshold is sent by the base station to the terminal by using radio resource control signaling or Media Access Control signaling.

5. The method according to claim 1, wherein if it is detected that the first logical channel does not comprise the first to-be-transmitted data, there is one second tunnel, a quantity of packets on the second logical channel is less than a preset quantity, and a packet length is less than a preset length, the second tunnel is selected to transmit the second to-be-transmitted data.

6. The method according to claim 1, wherein if it is detected that the first logical channel does not comprise the first to-be-transmitted data, there are at least two second tunnels, a total quantity of packets on a second logical channel corresponding to each second tunnel is less than a preset quantity, and a sum of lengths of the packets on the second logical channel corresponding to each second tunnel is less than a preset length, the second tunnel is selected to transmit the second to-be-transmitted data.

7. The method according to claim 6, wherein packets on the logical channels in the at least two second tunnels are mapped onto a same transport channel in a second tunnel for transmission.

8. The method according to claim 1, after the transmitting data by using the second tunnel, further comprising:
receiving, by the terminal by using the second tunnel, a transmission result fed back by a base station.

9. The method according to claim 1, wherein when the terminal is in the energy saving state, both the terminal and the base station store a context of the terminal, the base station maintains a connection to a core network, and the base station allocates no resource to the terminal.

10. A terminal, comprising:
a processor, a memory, an interface circuit, and a bus, wherein the processor, the memory, and the interface circuit are connected by using the bus, the interface circuit is used by the terminal to perform communication and data transmission with a base station, the memory is configured to store a set of program code, and the processor is configured to invoke the program code stored in the memory to perform the following operations:
when the terminal is in an energy saving state, detecting whether a first logical channel corresponding to a first tunnel comprises first to-be-transmitted data, and detecting whether a second logical channel corresponding to a second tunnel comprises second to-be-transmitted data;
if it is detected that the first logical channel comprises the first to-be-transmitted data, and a sum of the first to-be-transmitted data and the second to-be-transmitted data on the second logical channel is less than a preset threshold, selecting the second tunnel to transmit the first to-be-transmitted data and the second to-be-transmitted data; or if it is detected that the first logical channel does not comprise the first to-be-transmitted data, and the second to-be-transmitted data on the second logical channel is less than a preset threshold, selecting the second tunnel to transmit the second to-be-transmitted data; and
transmitting data by using the second tunnel.

11. The terminal according to claim 10, wherein the processor is further configured to:
if the base station supports the terminal in transmitting data by using the second tunnel when the terminal is in a connected state, and the terminal is currently not synchronized with the base station, when to-be-transmitted data is less than the preset threshold, select, by the terminal, the second tunnel to transmit the to-be-transmitted data; or
if the terminal is in a connected state and is currently synchronized with the base station, when to-be-transmitted data is less than the preset threshold, select, by the terminal, the second tunnel to transmit the to-be-transmitted data.

12. The terminal according to claim 10, wherein
the processor is further configured to:
determine a size of data on the first logical channel and a size of data on the second logical channel; and
when a sum of the data on the first logical channel and the data on the second logical channel is less than the preset threshold,
if the terminal is in a connected state and is currently not synchronized with the base station, or is in an idle state, or is in the energy saving state, or needs to obtain a transmission resource by using a random access procedure because no uplink transmission resource is available, select the second tunnel to transmit data; or
if the terminal is in a connected state and is currently synchronized with the base station, select the first tunnel or the second tunnel to transmit data.

13. The terminal according to any one of claims 10 to 12, wherein the preset threshold comprises a packet quantity threshold and/or a total-packet length threshold, and configuration information of the preset threshold is sent by the base station to the terminal by using radio resource control signaling or Media Access Control signaling.

14. The terminal according to claim 10, wherein the processor is further configured to:
if it is detected that the first logical channel does not comprise the first to-be-transmitted data, there is one second tunnel, a quantity of packets on the second logical channel is less than a preset quantity, and a packet length is less than a preset length, select the second tunnel to transmit the second to-be-transmitted data.

15. The terminal according to claim 10, wherein the processor is further configured to:
if it is detected that the first logical channel does not comprise the first to-be-transmitted data, there are at least two second tunnels, a total quantity of packets on a second logical channel corresponding to each second tunnel is less than a preset quantity, and a sum of lengths of the packets on the second logical channel corresponding to each second tunnel is less than a preset length, select the second tunnel to transmit the second to-be-transmitted data.

16. The terminal according to claim 15, wherein the processor is further configured to:
map packets on the logical channels in the at least two second tunnels onto a same transport channel in a second tunnel for transmission.

17. The terminal according to claim 10, wherein
the processor is further configured to:
receive, by using the second tunnel, a transmission result fed back by the base station.

18. The terminal according to claim 10, wherein when the terminal is in the energy saving state, both the terminal and the base station store a context of the terminal, the base station maintains a connection to a core network, and the base station allocates no resource to the terminal.
